(19) Europäisches Patentamt
European Patent Office
Office européen des brevets

(11) Publication number: **0 139 512**
**B1**

(12) # EUROPEAN PATENT SPECIFICATION

(45) Date of publication of patent specification: **09.09.87**

(21) Application number: **84306965.9**

(22) Date of filing: **11.10.84**

(51) Int. Cl.⁴: **C 09 B 69/00,** C 09 B 67/22, C 09 C 3/12 // C09C1/36, C09C1/30, C09C1/40, C09B43/32

(54) **Silane acetoacetarylide dyes, composite pigments obtainable therefrom, and processes for preparing the same.**

(30) Priority: **11.10.83 IT 2324183**

(43) Date of publication of application:
**02.05.85 Bulletin 85/18**

(45) Publication of the grant of the patent:
**09.09.87 Bulletin 87/37**

(84) Designated Contracting States:
**BE DE FR GB NL**

(56) References cited:
**FR-A-1 205 606**
**FR-A-1 205 996**

(73) Proprietor: **Montedison S.p.A.**
**31, Foro Buonaparte**
**I-20121 Milan (IT)**

(72) Inventor: **Marraccini, Antonio**
**4, corso Riviera**
**Dormelleto Novara (IT)**
Inventor: **Carlini, Filippo Maria**
**7, corso Torino**
**Novara (IT)**
Inventor: **Pasquale, Antonio**
**8, corso Milano**
**Novara (IT)**
Inventor: **Bornengo, Giorgio**
**8, via Paletta**
**Novara (IT)**
Inventor: **Maranzana, Giorgio**
**51, Strada Fara**
**Novara (IT)**

(74) Representative: **Whalley, Kevin et al**
**MARKS & CLERK 57/60 Lincoln's Inn Fields**
**London WC2A 3LS (GB)**

**EP 0 139 512 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to acetoacetarylide dyes containing, in chemical combination, a silane group, to the corresponding composite pigments obtainable therefrom by association with an inorganic solid substrate, and to processes for preparing such silane acetoacetarylide dyes and corresponding composite pigments.

There are known from French Patent No. FR—A—1205996 coloured materials of the azo-siloxane type.

Whenever used in the following description, the term "composite pigment" means a pigmentary material comprising an acetoacetarylide dye containing a silane group, chemically bonded with an inorganic solid substrate.

The association of the acetoacetarylide dye containing a silane group, or, briefly, silane acetoacetarylide dye, with the solid substrate, imparts a pigmentary nature to the dye itself.

Such association is obtained by formation of chemical bonds between the silane portion of the dye and the inorganic substrate.

An aim of the present invention is to provide silane acetoacetarylide dyes, insoluble in water, capable of providing composite pigments having high pigmentary properties.

Further aims of the invention are the preparation of the abovesaid dyes and pigments by means of simple and economic methods.

The present invention in one aspect provides acetoacetarylide dyes containing a silane group of formula:

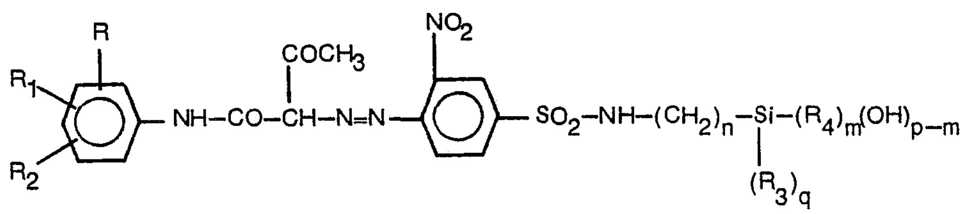
(I)

in which R, $R_1$ and $R_2$, which may be the same as or different from one another, represent a hydrogen atom, an alkyl or an alkoxyl group having up to 4 carbon atoms, a halogen, a nitro group, an acetyl ($—COCH_3$) group, or a carbamoyl ($—CONH_2$) group; n is 3, 4 or 5; q is 0 or 1; p and m are integers such that, when q is 0, p is 3 and m is 0, 1, 2 or 3, and when q is 1, p is 2 and m is 0, 1 or 2; $R_3$ is an alkyl group having up to 4 carbon atoms or a phenyl group; and $R_4$ is an alkoxyl group having up to 4 carbon atoms.

Such compounds according to the invention may be prepared, according to another aspect of the invention, by a process comprising reacting a silane compound of formula:

$$H_2N—(CH_2)_n—\underset{\displaystyle (R_3)_q}{\underset{|}{Si}}—(R_4)_m(OH)_{p-m} \qquad (II)$$

wherein n, $R_3$, $R_4$, $R_4$, q, m and p are as defined above, with the chloride of an acetoacetarylide sulphonic derivative of formula:

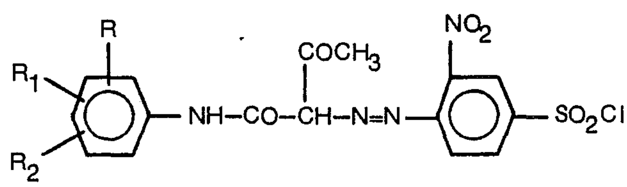
(III)

in which R, $R_1$ and $R_2$ are as defined above, in a substantially stoichiometric molar ratio of the silane (II) to the chloride (III), in a reaction medium comprising an organic solvent, at a temperature from 20 to 100°C, for 1 to 6 hours.

The reaction may be optionally conducted in the presence of a hydrochloric acid-acceptor compound, such as $Na_2CO_3$, $NaHCO_3$, triethylamine or pyridine.

As organic solvents there may be used, for example, xylene, toluene, chloro-, dichloro- and trichlorobenzenes, nitrobenzene and dioxane.

The chlorides of formula (III) are preparable according to conventional methods, for example by treating the corresponding sulphonic acetoacetarylide derivatives with an excess of $PCl_5$ and $POCl_3$ at temperatures of from 2 to 20°C for 2—12 hours.

The acetoacetarylide sulphonic derivatives are known products and can be prepared by means of diazo-coupling (diazo-copulation) of 3-nitro-4-aminobenzenesulphonic acid with known acetoacetarylide coupling (copulation) compounds of formula:

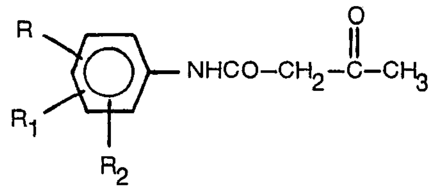

(IV)

in which R, $R_1$ and $R_2$ are as defined above, for example acetoacetanilide, 2'-methyl-acetoacetanilide, 4'-chloro-acetoacetanilide, 2'-methoxy-acetoacetanilide, 2',5'-dimethoxy-4'-chloro-acetoacetanilide and 2'-methyl-4'-chloro-acetoacetanilide.

As silane compounds of formula (II), those derived from amino-alkoxy-silanes, such as, for example, γ-amino-propyl-triethoxysilane,
δ-aminobutyl-phenyl-diethoxysilane,
γ-aminopropyl-methyl-diethoxysilane and
δ-amino-butyl-triethoxysilane have proved to be particularly suitable. Such amino-alkoxy-silanes are known compounds which are commercially available. However, they can be prepared, according to conventional techniques, for example by reaction of the corresponding chloro-alkoxy-silanes with aliphatic amines.

The silane acetoacetarylide dyes of formula (I) possess a fairly good solubility in organic solvents and do not possess, in themselves, pigmentary characteristics, although they exhibit a good tinting strength, bright shades from yellow-green to reddish-yellow and a good photostability.

The silane acetoacetarylide dyes of formula (I) contain in their molecule silanolic groups and/or alkoxyl groups hydrolyzable to silanolic groups $—Si(OH)_3$; are capable of both self-condensing, by reaction between the silanolic groups mentioned above, and chemically reacting with the surface hydroxyl groups of suitable inorganic substrates, which condense with those of the dyes, with formation of stable chemical bonds between the dye and the substrate, giving rise to a composite product having pigmentary characteristics.

The abovesaid dyes are therefore preferably used in the preparation of composite pigments, according to a further aspect of the invention, comprising silane acetoacetarylide dyes of formula (I) chemically bonded to an inorganic substrate.

Particularly suitable for being utilized in the preparation of composite pigments are the silane acetoacetarylide dyes of formula:

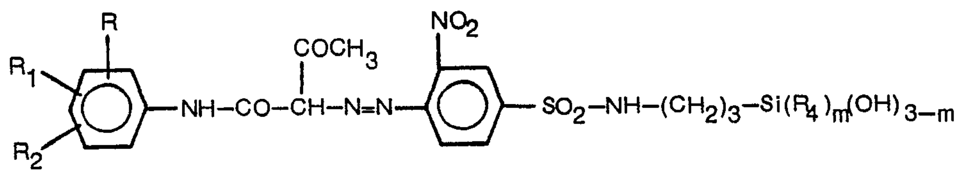

(V)

in which R, $R_1$, $R_2$, $R_4$ and m are as defined above.

Inorganic substrates particularly suited to obtain the pigmentary nature of the silane acetoacetarylide dyes of formula (I) are the following:
$TiO_2$, in its forms as gel, in the semicrystalline form, in the form of rutile or anatase $TiO_2$, also of the commercial type, in which there may be present surface coatings comprising mixtures of one or more oxides selected from amongst $SiO_2$, $Al_2O_3$, $TiO_2$; furthermore there may be used physical (mechanical) mixtures of $TiO_2$ with $SiO_2$ and/or $Al_2O_3$, as well as $SiO_2$ and/or $Al_2O_3$. The substrates are finely particulated. Owing to their superior characteristics, there are preferably employed mixed substrates of $TiO_2$, $SiO_2$ and/or $Al_2O_3$ obtained by precipitation of $SiO_2$ and/or $Al_2O_3$, also as alumino-silicates, onto particles of crystalline $TiO_2$, according to conventional methods.

In relation to the desired uses, hiding degree or power or tinting strength, the above-mentioned substrates may be employed also in admixture with one another.

The specific surface area of such substrates may vary over a wide range, from 5 to 500 $m^2/g$, preferably from 10 to 200 $m^2/g$.

Composite pigments containing from 10 to 50% by weight of chemically bound silane acetoacetarylide dye of formula (I) are particularly preferred due to their superior characteristics.

According to a yet further aspect of the invention, a process for preparing the composite pigments comprising the silane acetoacetarylide dyes (I) chemically bonded to the inorganic substrates comprises reacting the selected substrate with the silane dye (I) in an inert organic solvent, at a temperature from 20°C to the reflux temperature of the solvent, and separating the resulting product by filtration, and washing and drying it.

The reaction is usually accomplished in a time of 2—12 hours, more preferably 4—8 hours, depending on the reaction temperature.

Particularly advantageous results are obtained if the composite pigment, separate by filtration, is subjected to a dry heat-treatment in an oven for 4—8 hours at 60—110°C prior to washing, which washing is carried out in order to remove the unreacted silane dye.

To improve the condensation of the dye coating on the substrate it is possible to operate in the presence of catalysts such as LiOH, $CF_3COOH$, lead acetate, and cobalt naphthenate.

Further advantages are obtainable if the abovesaid process is carried out in the presence of a compound selected from tetra-alkoxy-silanes having up to 4 carbon atoms in each alkoxy group, such as Si $(OCH_3)_4$, or vinyl-triethoxy-silane $H_2C = CH—Si—(OC_2H_5)_3$, or alkyl-ortho-titanates, such as $Ti(OC_4H_9)_4$, in an amount ranging approximately from 0.1:1 to 1:1 by weight in respect of the dye of formula (I), with which they form insoluble copolymers, which are particularly suitable for coating the substrate.

As inert organic solvents, it is possible to use, for example, benzene, toluene, xylenes, nitrobenzene, chloro-benzenes, dioxane, dimethylformamide and acetonitrile.

The preparation process of the invention is particularly suitable for obtaining intensely coloured pigments having a high tinting strength, even in the presence of inorganic substrates having a low specific surface area, such as for example highly hiding $TiO_2$.

The composite pigments of the present invention may have a composition varying over a wide range, depending on the nature, granulometry and specific surface area of the substrate particles and in relation to the tinting strength desired for the pigment.

Granulometric analysis of a composite pigment according to the invention shows that the organic portion is essentially distributed on the surface of the inorganic substrate particles.

X-ray diffractometric analysis reveals that the composite pigment particles exhibit crystallinity which is characteristic of the substrate, while the acetoacetarylide coating is of an amorphous nature.

The acetoacetarylide pigments of the present invention, due to their composite nature achieved by chemical bonds between the organic silane component and the inorganic component, neither give rise to crystallization phenomena, nor change their crystalline form when in contact with aromatic solvents, even under hot conditions.

Furthermore, pigmentary compositions based on solvents, such as those used for the printing inks, do not cause sedimentation phenomena, not even after prolonged storing.

The abovesaid pigments exhibit excellent pigmentary characteristics, are insoluble in common organic and aqueous solvents, exhibit excellent stability to migration in polyvinyl chloride (PVC), to over-painting in stove alkyl enamel and to acid or alkaline treatments. Such pigments possess a good photostability and a good tinting strength, and are stable to heat both when obtained in the transparent form and at increasing hiding degrees.

Therefore they are conveniently employed in painting products, for air and stove enamels, in the pigmentation of plastics such as PVC, polystyrene, polyethyleneterephthalate, etc., and in printing inks, according to conventional applicative techniques.

The mechanical and/or thermal treatments employed in the above-mentioned conventional techniques do not substantially modify the pigmentary characteristics of the composite pigments of the present invention.

The composite pigments exhibit the substantial advantage of being composed of an inorganic substrate, which is inexpensive and is capable of imparting excellent pigmentary properties, in particular the desired hiding degree and an excellent resistance to solvents, on which substrate a silane acetoacetarylide dye, characterized by a good photostability, high tinting strength and shade purity, is reacted.

In general, the composite pigments according to the invention may be suitably used for colouring paints, air and stove enamels, printing inks, and plastics materials.

The invention will be further described with reference to the following illustrative examples. In the examples, all parts and percentages, unless otherwise specified, are by weight.

## Example 1

10 parts of an acetoacetarylide sulphonic derivative of formula:

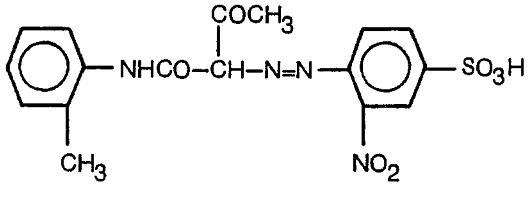

were reacted with 11.35 parts of $PCl_5$ in 110 parts of $POCl_3$, at a temperature below 5°C for 2 hours and successively for 12 hours at room temperature.

30 parts of dichlorobenzene were added: the chloride of the sulphonic derivative obtained was filtered, washed with dichlorobenzene, and then with xylene and petroleum ether.

4.38 parts of the chloride thus obtained were reacted in 80 parts of xylene with 2.33 parts of γ-aminopropyltriethoxysilane and with 1 part of triethylamine, for 12 hours at room temperature and for 2 hours at 90°C.

After filtering at ambient temperature, hot washing with 50 parts of a mixture of water and ammonium

hydrate (3:1) and successively with water and final drying, an intensely yellow coloured powder was obtained, which, on analysis, gave the following results:
C = 45%; H = 4.8%; N = 12.8%; Si = 5%.

Elemental analysis and the I.R. spectroscopic analysis revealed that the powder corresponded to the silane dye of formula:

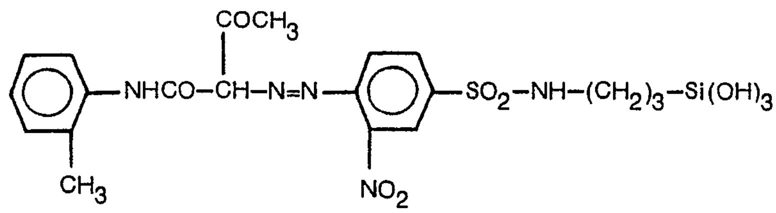

This dye may be present in part also in an oligomeric form, through the formation of siloxane bonds

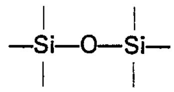

between the silanol functions —Si $(OH)_3$ present in the molecule.

Example 2

A silane acetoacetarylide composite pigment was prepared by using a mixed inorganic substrate of $TiO_2$, $SiO_2$ and $Al_2O_3$, prepared as follows: 100 parts of $TiO_2$ were dispersed, under mechanical stirring, in 1 liter of water and the resulting dispersion was then heated to 60°C. After a 15-minute stirring, 210 ml of a sodium silicate solution (titre: 365.47 parts/l of $SiO_2$) were added and successively there were added, in about 3 hours, about 200 ml of a solution of aluminium sulphate (titre: 60 parts/l of $Al_2O_3$). The addition was stopped when the slurry pH reached a value of 6. The slurry was stirred for 1 hour, then the product was filtered, washed with water in order to remove the soluble salts, and finally dried at a temperature of 70°C.

The dry product was crushed and then ground in an automatic mortar. A white powder having the following composition was obtained:
$TiO_2$ = 43.4%; $SiO_2$ = 35.1%; $Al_2O_3$ = 7.15%; $H_2O$ = 14.53%, and having a specific gravity area of 120 $m^2/g$, an effective specific gravity of 2.74 g/ml, an apparent specific gravity of 0.69 g/cc, a percentage porosity of 7.45 and a total porosity of 1.06 ml/g.

The silane acetoacetarylide composite pigment was prepared by introducing 1 part of the dye obtained in example 1 and 2 parts of the substrate obtained as described hereinabove, into a reactor containing 20 ml of dimethylformamide (DMF), 20 ml of xylene and 0.5 parts of aqueous HCl (1:3). The reaction mixture was heated to reflux temperature for 6 hours. Successively it was evaporated to 1/3 of the volume, was replenished with xylene and was further refluxed for 2 hours. After cooling to ambient temperature, the reaction mixture was filtered, and the resulting cake was washed with n-heptane and treated in an oven at 110°C overnight. After hot washing with a mixture of 50% DMF/xylene and drying, there was obtained a composite pigment consisting of an intensely yellow-green coloured powder, which, on analysis, was found to be composed of 71% of inorganic ashes.

This powder proved to be particularly stable to treatment, even under hot conditions, with organic solvents or with water. In applications in stove alkyd enamel and in polyvinyl chloride, it yielded yellow-coloured products with a green shade, having a good tinting strength, an excellent hiding power, and an excellent stability to overpainting, to migration and to sunlight, when present in mass or diluted with $TiO_2$.

The powdered composite pigment was found, on X-ray diffractometric analysis, under CuK α 1.5418 radiation, to consist of particles having the crystallinity typical of $TiO_2$ rutile, while no crystalline band of $SiO_2$, of $Al_2O_3$ and of the acetoacetarylide coating was visible, which, therefore, proved to be amorphous.

Example 3

0.8 parts of the dye obtained in example 1 were introduced into a reactor with 70 parts of water and 4.2 ml of sodium silicate solution (titre in $SiO_2$: 365.47 parts/l).

The suspension was heated to 60°C and, under stirring, it was additioned, in 3 hours, with 4 ml of an aluminium sulphate solution (titre in $Al_2O_3$ : 60 parts/l), maintained at 60°C for 1 hour and then cooled down to ambient temperature.

After filtration, the resulting cake was washed with water to neutral pH, was dried in an oven at 110°C overnight, then repeatedly washed with hot water and finally dried.

A yellow powder with green shades was obtained which, on analysis, was found to be composed of 70% of inorganic ashes.

The composite pigment, on X-ray analysis, was found to consist of amorphous particles.

The powder, in applications in stove enamel and in polyvinylchloride, provided perfectly transparent yellow products, having excellent stability and photostability.

Examples 4—15

By reacting γ-aminopropyl-triethoxysilane with various chlorides of acetoacetarylide sulphonic derivatives, according to the manner described in example 1, there were prepared 12 silane acetoacetarylide dyes having the formula:

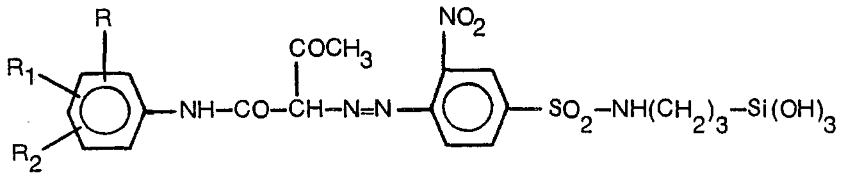

(VI)

in which, for each dye, the meanings and the bond position of substituents R, $R_1$ and $R_2$, when they were other than hydrogen, are indicated in Table 1.

By successively reacting, according to the manner of examples 2 and 3, the silane dyes with the various inorganic substrates indicated in Table 1, 12 yellow pigments, both transparent and hiding, having excellent pigmentary characteristics, were obtained.

TABLE 1

| Examples | Dyes of formula (VI) | | | Substrates |
|---|---|---|---|---|
| | R | $R_1$ | $R_2$ | |
| 4 | — | — | — | $TiO_2$—$SiO_2$—$Al_2O_3$ |
| 5 | — | — | — | $SiO_2$—$Al_2O_3$ |
| 6 | 2-$OCH_3$ | — | — | $SiO_2$—$Al_2O_3$ |
| 7 | 2-$OCH_3$ | — | — | $TiO_2$—$SiO_2$ |
| 8 | 2-Cl | — | — | $TiO_2$—$SiO_2$ |
| 9 | 2-Cl | — | — | $SiO_2$ |
| 10 | 4-Cl | — | — | $SiO_2$ |
| 11 | 2-$OCH_3$ | 5-$OCH_3$ | 4-Cl | $TiO_2$—$SiO_2$—$Al_2O_3$ |
| 12 | 2-$OCH_3$ | 5-$OCH_3$ | 4-Cl | $SiO_2$—$Al_2O_3$ |
| 13 | 2-$OCH_3$ | 4-$OCH_3$ | — | $SiO_2$ |
| 14 | 4-$CONH_2$ | — | — | $SiO_2$ |
| 15 | 2-$CH_3$ | 4-Cl | — | $SiO_2$ |

Example 16 (Application in PVC)

In a rotary-arm mixer there were mixed, at 70°C: 1.0 part of the pigment obtained according to example 2 and previously ground,

100 parts of polyvinyl chloride (PVC) in powder form,

1.5 parts of calcium stearate for exerting a complexing and a stabilizing action,

3.0 parts of epoxydized soybean oil,

0.5 parts of lubricant (a mixture of glycerides from $C_{16}$ to $C_{36}$).

2.0 parts of $TiO_2$.

The resulting mixture was then treated at 180°C in a three-cylinder refiner until there was obtained complete dispersion of the pigment in order to obtain a sheet exhibiting a brilliant, highly hiding yellow-green colour, having a good shade intensity, a good stability to sunlight, a good tinting strength, a good stability to heat and an excellent stability to migration.

Example 17 (Application in enamels)

5.0 parts of the pigment obtained according to example 2 were mixed by grinding with 95.0 parts of a fluid carrier having the following composition:

22% of alkyd resin,
19% of melamine resin,
59% of xylene.

Homogenizing was carried out in a ball mill by grinding the mixture in the presence of porcelain balls of 10 mm diameter, for a 24-hour period.

The resulting enamel was applied onto a surface to be painted, and was allowed to dry overnight, whereafter it was kept in an oven at 120°—125°C for 30 minutes.

A brilliant yellow-green painting having excellent hiding power, stability to sunlight and to over-painting, and with a good tinting strength was obtained.

With a view to obtaining a paint exhibiting a lighter shade and having a higher hiding power, 1 part of an enamel obtained as described hereinbefore was further diluted with 9 parts of a stove synthetic white enamel (10% of $TiO_2$) having the following composition:

30% of alkyd resin,
27% of melamine resin,
33% of xylene,
10% of $TiO_2$.

Homogenizing was accomplished in a ball mill by grinding the mixture in the presence of porcelain balls of 10 mm diameter, for a 24-hour period. The resulting cut enamel was applied onto the surface to be painted, was allowed to dry overnight and then kept in an oven at 120—125°C for 30 minutes. A light yellow-green paint having excellent general stabilities and a high hiding power was thus obtained.

Example 18 (Application in polystyrene)

0.04 g of the pigment obtained according to example 2 and previously ground were added to 100 g of polystyrene (EDISTIR NA, a Montedison registered trade-mark) previously dried and then calendered at 160°C for 5 minutes.

The dyed material was cut and successively crushed in a gear apparatus.

To evaluate the shade, tinting strength and thermostability, mouldings were carried in a CARVER (Registered Trade Mark) press at 200°C and at 260°C.

Thus, a moulded article exhibiting a hiding yellow shade, characterized by a good thermostability and a good photostability, was obtained.

**Claims**

1. An acetoacetarylide dye containing a silane group, characterized by having the formula:

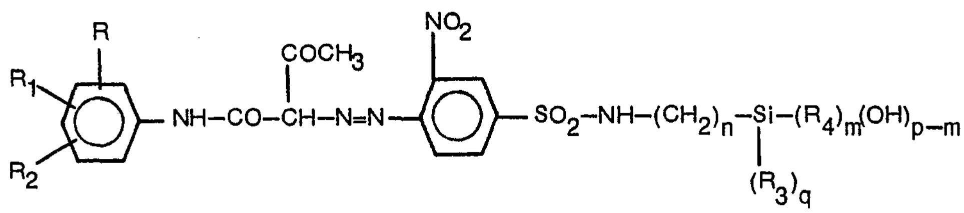

(I)

in which R, $R_1$ and $R_2$, which may be the same as or different from one another, represent a hydrogen atom, an alkyl or an alkoxy group having up to 4 carbon atoms, a halogen, a nitro group, an acetyl ($—COCH_3$) group, or a carbamoyl ($—CONH_2$) group; n is 3, 4 or 5; q is 0 or 1; p and m are integers such that, when q is 0, p is 3 and m is 0, 1, 2 or 3, and when q is 1, p is 2 and m is 0, 1 or 2; $R_3$ is an alkyl group having up to 4 carbon atoms or a phenyl group; and $R_4$ is an alkoxy group having up to 4 carbon atoms.

2. A silane acetoacetarylide dye as claimed in claim 1, characterized by having the formula:

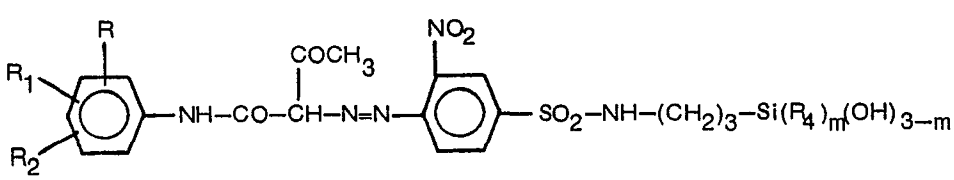

in which R, $R_1$, $R_2$, $R_4$ and m are as defined in claim 1.

3. A process for preparing an acetoacetarylide dye according to claim 1, characterized by comprising reacting a silane compound of formula:

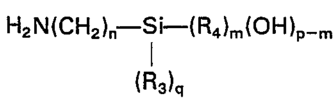

(II)

in which n, $R_3$, $R_4$, q, m and p are as defined in claim 1, with a chloride of an acetoacetarylide sulphonic derivative of formula:

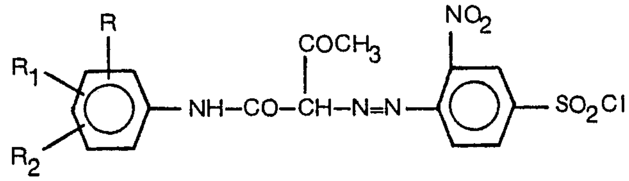

(III)

in which R, $R_1$ and $R_2$ are as defined in claim 1, in a substantially stoichiometric molar ratio of the silane (II) to the chloride (III), in a reaction medium comprising an organic solvent, at a temperature from 20 to 100°C, for 1 to 6 hours.

4. A process as claimed in claim 3, characterized in that the reaction is carried out in the presence of a hydrochloric acid-acceptor compound.

5. A process as claimed in claim 4, characterized in that the hydrochloric acid-acceptor compound is selected from $Na_2CO_3$, $NaHCO_3$, triethylamine and pyridine.

6. A process as claimed in any of claims 3 to 5, characterized in that the aminoalkoxysilane of formula (II) is selected from γ-aminopropyl-triethoxysilane, δ-aminobutyl-phenyl-diethoxysilane, γ-aminopropyl-methyl-diethoxysilane, and δ-aminobutyl-triethoxysilane.

7. A process as claimed in any of claims 3 to 6, characterized in that the organic solvent is selected from xylene, toluene, chloro-, dichloro- and trichloro-benzenes, nitrobenzene and dioxane.

8. A composite pigment characterized by comprising a silane acetoacetarylide dye as claimed in claim 1 or 2, chemically bonded to a solid inorganic substrate.

9. A composite pigment as claimed in claim 8, characterized in that the inorganic substrate is selected from $TiO_2$ gel, semicrystalline $TiO_2$, rutile $TiO_2$ and anatase $TiO_2$; mixtures of $TiO_2$ with $SiO_2$ and/or $Al_2O_3$; $SiO_2$ and/or $Al_2O_3$ and mixtures thereof; the said substrate being finely particled and having a specific surface area of from 5 to 500 $m^2/g$.

10. A composite pigment as claimed in claim 8 or 9, characterized by containing from 10 to 50% by weight of chemically bound silane acetoacetarylide dye.

11. A process for preparing a composite pigment according to claim 8, characterized by comprising reacting the inorganic substrate with a silane acetoacetarylide dye of formula (I) in an inert organic solvent, at a temperature from 20°C to the reflux temperature of the solvent, and separating the pigment by filtration followed by washing and drying.

12. A process as claimed in claim 11, characterised in that the composite pigment, separated by filtration, is subjected to a dry-heat treatment in an oven at 60°—110°C for 4 to 8 hours prior to washing.

13. A process as claimed in claim 11 or 12, characterized in that the reaction is conducted in the presence of a catalyst selected from LiOH, $CF_3COOH$, lead acetate and cobalt naphthenate.

14. A process as claimed in any of claims 11 to 13, characterized in that the reaction is conducted in the presence of a compound selected from tetra-alkoxysilanes containing up to 4 carbon atoms in each alkoxy group, vinyltriethoxysilane and alkylorthotitanates, in a weight ratio with respect to the dye (I) of from 0.1:1 to 1:1.

15. A paint, air enamel, stove enamel, printing ink, or plastics material, when coloured with a composite pigment as claimed in any of claims 8 to 10.

**Patentansprüche**

1. Acetoacetarylid-Farbstoff mit einer Silangruppe, gekennzeichnet durch die Formel:

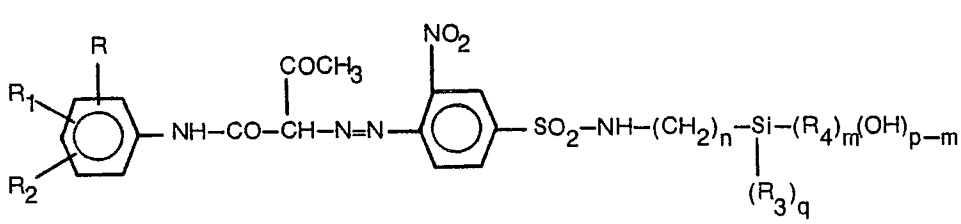

(I)

in der R, $R_1$ und $R_2$, die gleich oder verschieden voneinander sein können, ein Wasserstoffatom, eine Alkyl- oder Alkoxygruppe mit bis zu 4 Kohlenstoffatomen, ein Halogen, eine Nitrogruppe, eine Acetylgruppe ($—COCH_3$) oder eine Carbamoylgruppe ($—CONH_2$) bedeuten; n 3, 4 oder 5 ist; q 0 oder 1 ist; p und m ganze Zahlen derart sind, daß wenn q 0 ist, p 3 ist und m 0, 1, 2 oder 3 ist, und wenn q 1 ist, p 2 ist und m 0, 1 oder 2 ist; $R_3$ eine Alkylgruppe bis zu 4 Kohlenstoffatomen oder eine Phenylgruppe ist; und $R_4$ eine Alkoxygruppe mit bis zu 4 Kohlenstoffatomen ist.

2. Silan-Acetoacetarylid-Farbstoff nach Anspruch 1, gekennzeichnet durch die Formel:

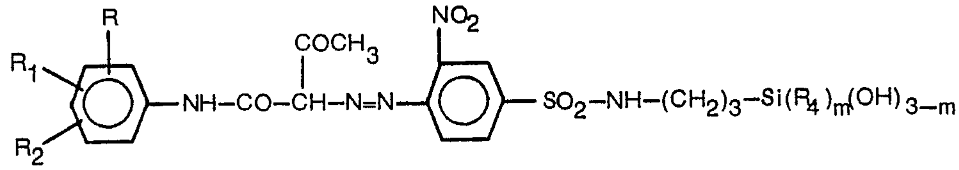

in der R, $R_1$, $R_2$, $R_4$ und m wie in Anspruch 1 definiert sind.

3. Verfahren zur Herstellung eines Acetoacetarylid-Farbstoffs nach Anspruch 1, dadurch gekennzeichnet, daß man eine Silanverbindung der Formel:

$$H_2N(CH_2)_n{-}\underset{\displaystyle (R_3)_q}{\underset{|}{Si}}{-}(R_4)_m(OH)_{p-m} \qquad (II)$$

in der n, $R_3$, $R_4$, q, m und p wie in Anspruch 1 definiert sind, mit einem Chlorid eines Acetoacetarylid-Sulfonsäurederivats der Formel:

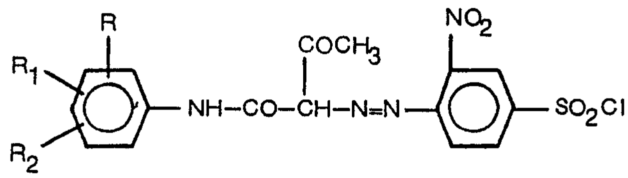

(III)

in der R, $R_1$ und $R_2$ wie in Anspruch 1 definiert sind, in einem im wesentlichen stöchiometrischen Molverhältnis des Silans (II) zu dem Chlorid (III) in einem Reaktionsmedium, das ein organisches Lösungsmittel umfaßt, bei einer Temperatur von 20 bis 100°C 1 bis 6 Stunden umsetzt.

4. Verfahren nach Anspruch 3, dadurch gekennzeichnet, daß die Reaktion in Gegenwart einer Chlorwasserstoffsäure-Akzeptorverbindung durchgeführt wird.

5. Verfahren nach Anspruch 4, dadurch gekennzeichnet, daß die Chlorwasserstoffsäure-Akzeptorverbindung ausgewählt ist unter $Na_2CO_3$, $NaHCO_3$, Triethylamin und Pyridin.

6. Verfahren nach irgendeinem der Ansprüche 3 bis 5, dadurch gekennzeichnet, daß das Aminoalkoxysilan der Formel (II) ausgewählt ist unter
γ-Aminopropyl-triethoxysilan,
δ-Aminobutyl-phenyl-diethoxysilan,
γ-Aminopropyl-methyl-diethoxysilan und
δ-Aminobutyl-triethoxysilan.

7. Verfahren nach irgendeinem der Ansprüche 3 bis 6, dadurch gekennzeichnet, daß das organische Lösungsmittel ausgewählt ist unter Xylol, Toluol, Chlor-, Dichlor- und Trichlorbenzolen, Nitrobenzol und Dioxan.

8. Komposit-Pigment, dadurch gekennzeichnet, daß es einen Silan-Acetoacetarylid-Farbstoff nach Anspruch 1 oder 2, chemisch gebunden an ein festes anorganisches Substrat umfaßt.

9. Komposit-Pigment nach Anspruch 8, dadurch gekennzeichnet, daß das anorganische Substrat ausgewählt ist unter $TiO_2$-Gel, semikristallinem $TiO_2$, Rutil $TiO_2$ und Anatas $TiO_2$; Mischungen von $TiO_2$ mit $SiO_2$ und/oder $Al_2O_3$; $SiO_2$ und/oder $Al_2O_3$ und Mischungen davon; wobei das Substrat feinteilig ist und eine spezifische Oberfläche von 5 bis 500 $m^2/g$ hat.

10. Komposit-Pigment nach Anspruch 8 oder 9, dadurch gekennzeichnet, daß es 10 bis 50 Gewichtsprozent chemisch gebundenen Silan-Acetoacetarylid-Farbstoff enthält.

11. Verfahren zur Herstellung eines Komposit-Pigments nach Anspruch 8, dadurch gekennzeichnet, daß man das anorganische Substrat mit einem Silan-Acetoacetarylid-Farbstoff der Formel (I) in einem inerten organischen Lösungsmittel bei einer Temperatur von 20°C bis zur Rückflußtemperatur des Lösungsmittels umsetzt und das Pigment durch Filtration, gefolgt von Waschen und Trocknen, abtrennt.

12. Verfahren nach Anspruch 11, dadurch gekennzeichnet, daß das durch Filtration abgetrennte Komposit-Pigment vor dem Waschen einer Trocknung/Wärmebehandlung in einem Ofen bei 60 bis 110°C 4 bis 8 Stunden unterworfen wird.

13. Verfahren nach Anspruch 11 oder 12, dadurch gekennzeichnet, daß die Reaktion in Gegenwart eines Katalysators, ausgewählt unter LiOH, $CF_3COOH$, Bleiacetat und Kobaltnaphthenat, durchgeführt wird.

14. Verfahren nach irgendeinem der Ansprüche 11 bis 13, dadurch gekennzeichnet, daß die Reaktion in Gegenwart einer Verbindung, ausgewählt unter Tetraalkoxysilanen mit bis zu 4 Kohlenstoffatomen in jeder Alkoxygruppe, Vinyltriethoxysilan und Alkylorthotitanaten, in einem Gewichtsverhältnis, bezogen auf den Farbstoff (I), von 0,1:1 bis 1:1 durchgeführt wird.

15. Anstrichfarbe, lufttrocknender Lack, Einbrennlack, Druckfarbe oder Kunststoffmaterial, gefärbt mit einem Komposit-Pigment nach irgendeinem der Ansprüche 8 bis 10.

**Revendications**

1. Un colorant d'acéto-acétarylide contenant un groupe silane, caractérisé par la formule:

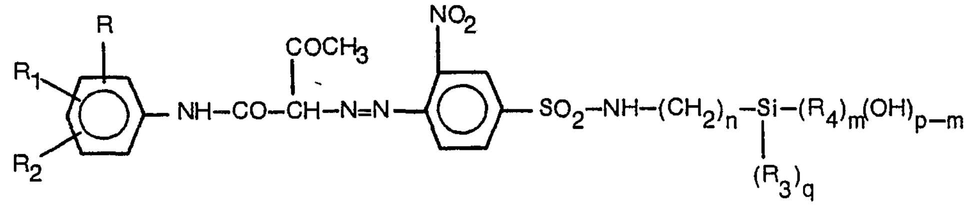
(I)

dans laquelle:

R, $R_1$ et $R_2$, qui peuvent être identiques ou différents, représentent un atome d'hydrogène, un groupe alkyle ou alkoxyle comportant jusqu'à 4 atomes de carbone, un halogène, un groupe nitro, un groupe acétyle ($—COCH_3$) ou un groupe carbamoyle ($—CONH_2$);

n est égal à 3, 4 ou 5;

q est égal à 0 ou 1;

p et m sont des entiers choisis de telle sorte que lorsque q est égal à 0, p est égal à 3 et m est égal à 0, 1, 2 ou 3 et, lorsque q est égal à 1, p est égal à 2 et m est égal à 0, 1 ou 2;

$R_3$ représente un groupe alkyle comportant jusqu'à 4 atomes de carbone ou un groupe phényle; et

$R_4$ représente un groupe alkoxyle comportant jusqu'à 4 atomes de carbone.

2. Un colorant d'acéto-acétarylide silanique selon la revendication 1, caractérisé par la formule:

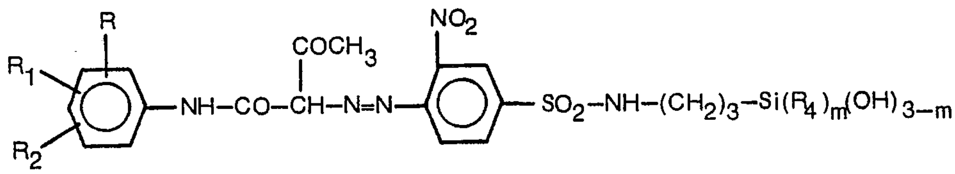

dans laquelle R, $R_1$, $R_2$, $R_4$ et m sont comme définis dans la revendication 1.

3. Un procédé de préparation d'un colorant d'acétoacétarylide selon la revendication 1, caractérisé en ce qu'il comprend une réaction entre un composé silanique de formule:

$$H_2N—(CH_2)_n—\underset{\underset{(R_3)_q}{|}}{Si}—(R_4)_m(OH)_{p-m} \qquad (II)$$

dans laquelle n, $R_3$, $R_4$, q, m et p sont tels que définis dans la revendication 1, avec un chlorure d'un dérivé sulfonique d'acéto-acétarylide de formule:

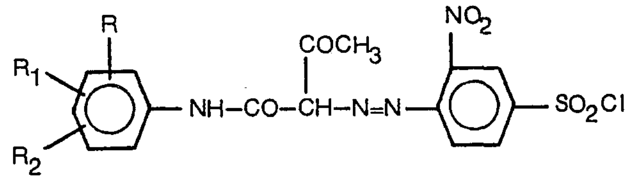
(III)

dans laquelle R, $R_1$ et $R_2$ sont tels que définis dans la revendication 1, dans un rapport molaire pratiquement stoechiométrique du silane (II) par rapport au chlorure (III), dans un milieu réactionnel comprenant un solvant organique, à une température comprise entre 20 et 100°C, pendant 1 à 6 heures.

4. Un procédé selon la revendication 3, caractérisé en ce que la réaction est effectuée en présence d'un composé accepteur d'acide chlorhydrique.

5. Un procédé selon la revendication 4, caractérisé en ce que le composé accepteur d'acide chlorhydrique est choisi dans la liste comprenant $Na_2CO_3$, $NaHCO_3$, triéthylamine et pyridine.

6. Un procédé selon l'une quelconque des revendications 3 à 5, caractérisé en ce que l'aminoalkoxysilane de formule (II) est choisi dans la liste comprenant le γ-aminopropyltriéthoxysilane, le δ-aminobutylphényldiéthoxysilane, le γ-aminopropylméthyldiéthoxysilane et le δ-aminobutyltriéthoxylane.

7. Un procédé selon l'une quelconque des revendications 3 à 6, caractérisé en ce que le solvant organique est choisi dans la liste comprenant: xylène, toluène, chloro-, dichloro- et trichlorobenzènes, nitrobenzène et dioxanne.

8. Un pigment composé caractérisé en ce qu'il comprend un colorant d'acéto-acétarylide silanique selon la revendication 1 ou 2, chimiquement lié à un substrat minéral solide.

9. Un pigment composé selon la revendication 8, caractérisé en ce que le substrat minéral est choisi

dans la liste comprenant: $TiO_2$ sous forme de gel, $TiO_2$ semi-cristallin, $TiO_2$ sous forme de rutile et $TiO_2$ sous forme d'anatase, des mélanges de $TiO_2$ et de $SiO_2$ et/ou $Al_2O_3$, $SiO_2$ et/ou $Al_2O_3$ et leurs mélanges, ledit substrat étant réduit en fines particules et présentant une surface spécifique comprise entre 5 et 500 $m^2/g$.

10. Un pigment composé selon les revendications 8 ou 9, caractérisé en ce qu'il contient entre 10 et 50% en poids de colorant d'acéto-acétarylide silanique lié chimiquement.

11. Un procédé de préparation d'un pigment composé selon la revendication 8, caractérisé en ce qu'il consiste à faire réagir le substrat minéral avec un colorant d'acéto-acétarylide silanique de formule (I) dans un solvant inerte organique, à une température comprise entre 20°C et la température de reflux du solvant, et à séparer le pigment par filtration puis à le laver et à le sécher.

12. Un procédé selon la revendication 11, caractérisé en ce que le pigment composé séparé par filtration est soumis à un séchage à chaud dans un four à 60—110°C pendant 4 à 8 heures avant le lavage.

13. Un procédé selon la revendication 11 ou 12, caractérisé en ce que la réaction est conduite en présence d'un catalyseur choisi parmi LiOH, $CF_3COOH$, l'acétate de plomb et le naphténate de cobalt.

14. Un procédé selon l'une quelconque des revendications 11 à 13, caractérisé en ce que la réaction est conduite en présence d'un composé choisi parmi les tétra-alkoxysilanes contenant jusqu'à 4 atomes de carbone dans chaque groupe alkoxy, vinyltriéthoxysilane et alkylorthotitanates, dans un rapport pondéral par rapport au colorant (I) compris entre 0,1/1 et 1/1.

15. Une peinture, un vernis séchant à l'air, un vernis à cuire, une encre d'impression ou des substances plastiques lorsqu'elles sont colorées par un pigment composé selon l'une quelconque des revendications 8 à 10.